(19) Europäisches Patentamt
European Patent Office
Office européen des brevets

(11) **EP 3 308 040 B1**

(12) **FASCICULE DE BREVET EUROPEEN**

(45) Date de publication et mention
de la délivrance du brevet:
**12.02.2020 Bulletin 2020/07**

(51) Int Cl.:
***F16B 19/10*** *(2006.01)*

(21) Numéro de dépôt: **16732506.7**

(22) Date de dépôt: **10.06.2016**

(86) Numéro de dépôt international:
**PCT/EP2016/063298**

(87) Numéro de publication internationale:
**WO 2016/198600 (15.12.2016 Gazette 2016/50)**

(54) **FIXATION INSTALLÉE D'UN SEUL CÔTÉ**

AN EINER EINZIGEN SEITE ANGEBRACHTES ANBAUTEIL

ATTACHMENT FITTED ON A SINGLE SIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.06.2015 FR 1555313**

(43) Date de publication de la demande:
**18.04.2018 Bulletin 2018/16**

(73) Titulaire: **LISI Aerospace**
**75583 Paris Cedex 12 (FR)**

(72) Inventeurs:
• **VILLET, Antoine**
**95800 Cergy (FR)**
• **NARETTO, Nicolas**
**Redondo Beach, Californie 90277 (US)**
• **GAY, Olivier**
**95450 Commeny (FR)**
• **PAILHORIES, Guy**
**12200 Villefranche de Rouergue (FR)**

(74) Mandataire: **Ipside**
**7-9 Allées Haussmann**
**33300 Bordeaux Cedex (FR)**

(56) Documents cités:
**GB-A- 2 368 889    US-A1- 2014 130 335**

**Description**

La présente invention concerne une fixation qui s'installe au travers de structures par un seul côté de l'assemblage, appelé communément côté « accessible ». Ce type de fixations est utilisé par exemple dans l'assemblage de structures d'un aéronef.

En particulier, la présente invention concerne une fixation pour attacher des éléments de structures ayant des perçages alignés présentant un diamètre nominal D, les éléments ayant une épaisseur nominale variant entre une épaisseur minimale et une épaisseur maximale, la fixation comprenant un plan de serrage minimum Gmin et un plan de serrage maximum Gmax, et

- une vis comprenant une tête élargie à une extrémité et une portion filetée à une extrémité opposée,
- une douille comprenant une tête élargie apte à recevoir la tête de la vis et destinée à venir au contact avec une première face des éléments de structure, un corps tubulaire et une portion taraudée venant en prise avec la portion filetée de la vis, la portion taraudée étant adjacente à une portion intérieurement lisse du corps de la douille, ladite portion lisse présentant une épaisseur nominale E, une zone peu déformable adjacente à la tête de la douille et une zone déformable adjacente à la zone peu déformable,
- la zone déformable de la douille a une résistance affaiblie par rapport à la résistance de la zone peu déformable afin de faciliter la déformation radiale de la portion déformable en un bulbe destiné à venir en contact avec une face des éléments de structure opposée à la première face, communément appelée face « aveugle ».

Ce type de fixation aussi appelée « rivet aveugle » est connu par exemple du document US 3,236,143, la fixation comprenant de plus un élément de préhension cassable au niveau d'une gorge de rupture.

La demande de brevet US 2014/0130335 décrit une fixation aveugle comprenant une vis et une douille, laquelle présente une portion déformable destinée à former un bulbe lors de la mise en place de la fixation.

La demande de brevet britannique GB 2 368 889 décrit un insert aveugle et une méthode de fabrication d'un tel insert.

Les structures des aéronefs comprennent de plus en plus de matériaux composites qui présentent des risques de délaminage lorsqu'ils sont soumis localement à des efforts de compression importants. Pour éviter de délaminer le composite, le diamètre extérieur du bulbe d'une fixation aveugle ne doit pas être trop petit par rapport au diamètre nominal D du perçage dans lequel la fixation est insérée. Par ailleurs, le bulbe d'une telle fixation doit avoir une portée uniforme et doit impérativement se former de manière répétitive, à l'épaisseur minimale de structure comme à l'épaisseur maximale. L'assurance d'un bulbe correctement formé et de taille suffisante est obligatoire lorsqu'il n'est pas possible d'inspecter la face aveugle de la structure.

L'invention a pour but de résoudre les inconvénients des fixations de l'art antérieur, et notamment de fournir une fixation qui permette de former un bulbe de diamètre extérieur égal à une fois et demi le diamètre nominal du perçage de la structure et dont la forme est uniforme et répétable, donc stable, quelque soit l'épaisseur de structure à serrer d'épaisseur nominale donnée variant entre une épaisseur minimale et une épaisseur maximale.

Pour cela, la fixation selon l'invention est du type précité, telle que la zone déformable s'étend sur une longueur qui est supérieure à une longueur minimale Lmin et inférieure à une longueur maximale Lmax, les longueurs minimale et maximale étant définies par les relations :

$$Lmin = D/2 + 2E + (Gmax - Gmin), \qquad \{1\}$$

$$Lmax = (E / 0{,}092) \qquad \{2\}$$

le début de la zone déformable étant au plus disposé dans le plan de serrage minimum Gmin de la fixation.

Une telle fixation présente l'avantage de former des bulbes larges et stables.

La fixation selon l'invention présente également de préférence au moins une des caractéristiques ci-dessous :

- l'affaiblissement de la résistance de la zone déformable est obtenu par une diminution locale de la dureté,
- l'affaiblissement de la résistance de la zone déformable est obtenu par une diminution de l'épaisseur nominale du corps tubulaire,
- la douille est un acier inoxydable de type A286 ou est un alliage de titane, par exemple de type Beta-C,
- la zone déformable présente une dureté inférieure ou égale à 300 HV,
- la zone déformable présente une dureté inférieure ou égale à 220 HV,

- la fixation a un diamètre de 6,32 mm, une épaisseur nominale de corps tubulaire de 0,75 mm et une zone déformable de longueur comprise entre 6,67 mm et 8,152 mm,
- la fixation a un diamètre de 4,80 mm, une épaisseur nominale de corps tubulaire de 0,58 mm et une zone déformable de longueur comprise entre 5,55 mm et 6,304 mm,
- la douille comprend un titane ou un alliage de titane.

D'autres buts, caractéristiques et avantages de l'invention apparaîtront à la description d'exemples de modes de réalisation de l'invention, description faite en liaison avec les dessins dans lesquels:

- la figure 1 est une vue isométrique d'une fixation selon un mode de réalisation de l'invention, dans un état non installé,
- la figure 2 est une vue en coupe d'une fixation selon un mode de réalisation de l'invention, dans un état non installé,
- la figure 3 est une vue en coupe d'une fixation selon un mode de réalisation de l'invention, dans un état installé et formant un bulbe,
- les figures 4A, 4B, 4C sont des vues de bulbes incorrectement formés, issues de photographies. La figure 4B correspond à une coupe de fixation posée dont le bulbe est similaire au bulbe de la figure 4A,
- La figure 5 est une représentation graphique du gradient de dureté selon la longueur de la douille de la fixation selon un mode de réalisation de l'invention.

Pour faciliter la lecture des dessins, seuls les éléments nécessaires à la compréhension de l'invention ont été représentés. Les mêmes éléments portent les mêmes références d'un dessin à l'autre. Les dimensions indiquées dans le reste de la description sont considérées comme étant nominales. Une tolérance, par exemple de 0,1 mm, peut être appliquée à toutes ou certaines de ces dimensions, selon les pratiques usuelles en conception mécanique.

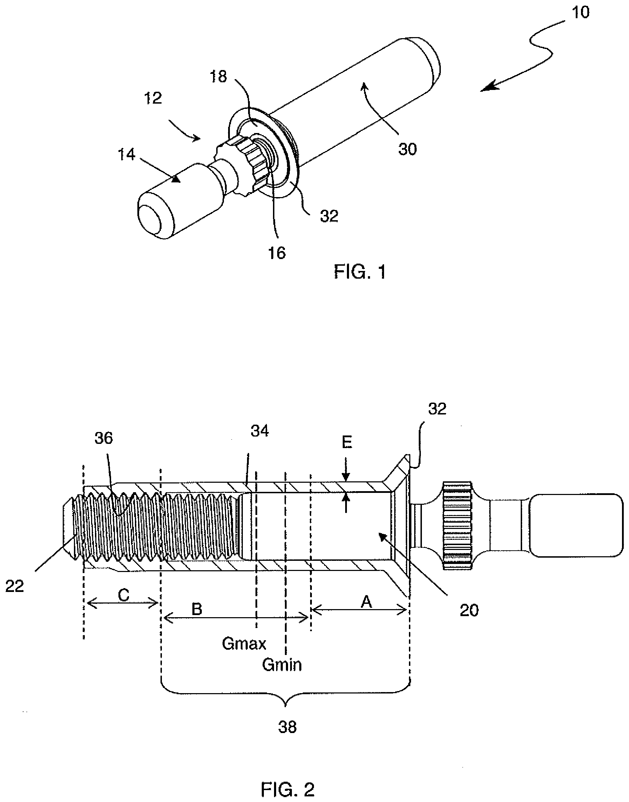

En référence aux figures 1 à 3, une fixation 10 selon un mode de réalisation de l'invention comprend une vis 12 et une douille 30. La vis 12 comprend un élément de préhension 14, une gorge de rupture 16, une tête 18 fraisée, un fût cylindrique 20 et une portion filetée 22.

La gorge de rupture 16 est dimensionnée de sorte à présenter le plus petit diamètre de la vis 12, capable de soutenir une contrainte en traction d'installation donnée, et cassant sous une contrainte de torsion donnée.

La vis 12 est insérée avec un jeu faible dans la douille 30 qui comprend une collerette 32 élargie apte à recevoir la tête 18 fraisée de la vis, et un fût tubulaire 34. Avant installation de la fixation 10 dans une structure, la surface extérieure de la portion tubulaire 34 est cylindrique.

Le fût tubulaire 34 présente à une extrémité opposée à la collerette une portion taraudée 36 et, entre la collerette et la portion taraudée, une portion dont la surface intérieure 38 est cylindrique et lisse, c'est-à-dire non taraudée. Dans l'exemple de la figure 2, l'épaisseur nominale de paroi E du fût tubulaire est constante. Le filetage de la vis 12 et le taraudage de la douille 30 sont complémentaires. Ce sont par exemple des filets conformes à la norme AS8879, couramment utilisée pour les fixations aéronautiques.

La longueur de la fixation 10 est fonction d'une épaisseur de structures à assembler, dont l'épaisseur nominale varie entre une épaisseur minimale et une épaisseur maximale. L'intervalle d'épaisseur nominale de structure varie classiquement par pas de 1/16" (1,5875 mm). La fixation 10 présente donc une capacité de serrage minimum et une capacité de serrage maximale permettant d'assembler une épaisseur de structure nominale variant entre un minimum et un maximum. Le plan correspondant à l'épaisseur minimale que peut serrer la fixation est appelé « grip min » ou « plan de serrage minimum » et est référencé « Gmin » sur les figures. Le plan correspondant à l'épaisseur maximale que peut serrer la fixation est appelé « grip max » ou « plan de serrage maximum » et est référencé « Gmax » sur les figures. Sur la fixation, les distances Gmax et Gmin sont mesurées depuis l'extrémité de la collerette 32 lorsque la tête est fraisée (figure 2), et du dessous de collerette lorsque la tête est protubérante.

La longueur totale de la douille 30 est divisée en trois zones successives et adjacentes. Une première zone A (figure 2) comprend la collerette 32 et une portion de fût tubulaire 34 adjacente ayant une surface intérieure lisse. La zone A est peu déformable. Elle s'étend sur une longueur au plus égale à l'épaisseur minimum de structure (Gmin) que la fixation peut assembler.

Une deuxième zone B dite zone déformable s'étend sur le reste du fût 34 tubulaire ayant une surface intérieure lisse. La zone B de douille est destinée à être déformée pour former un bulbe qui s'appuiera sur le côté aveugle des structures à assembler. Pour faciliter la formation du bulbe, la zone B doit présenter une résistance affaiblie par rapport à la résistance de la zone non déformable. L'affaiblissement peut être obtenu par une diminution de la dureté sur la zone déformable B. Dans ce cas, la dureté de la zone déformable B doit être au moins inférieure de 20 % à la dureté de la zone non déformable A, pour que la déformation s'effectue préférentiellement dans la zone déformable B, cette différence dépendant du matériau effectivement utilisé. La diminution de la dureté peut être obtenue par un recuit annulaire local, par exemple au moyen d'une machine à induction.

La douille peut également être formée de différents matériaux de duretés différentes, soudés ensemble: la zone déformable B peut être en un matériau plus déformable que le matériau de la zone non déformable A.

L'affaiblissement de la résistance peut également être obtenu par la diminution locale de l'épaisseur nominale de la douille, au moyen par exemple d'un épaulement réalisé sur une portion de la surface intérieure lisse de la douille, diminuant sur la longueur de cette zone l'épaisseur de la douille.

La zone B de la douille recouvre, quand la fixation 10 n'est pas installée, la portion restante de fût lisse 22 de la vis et une portion de filetage.

La troisième zone C de douille s'étend sur toute la portion taraudée 36. Cette zone assure la fonction d'un écrou. Lorsque la fixation 10 n'est pas installée, cette zone C est au contact d'une portion terminale de filetage 22 de la vis 12.

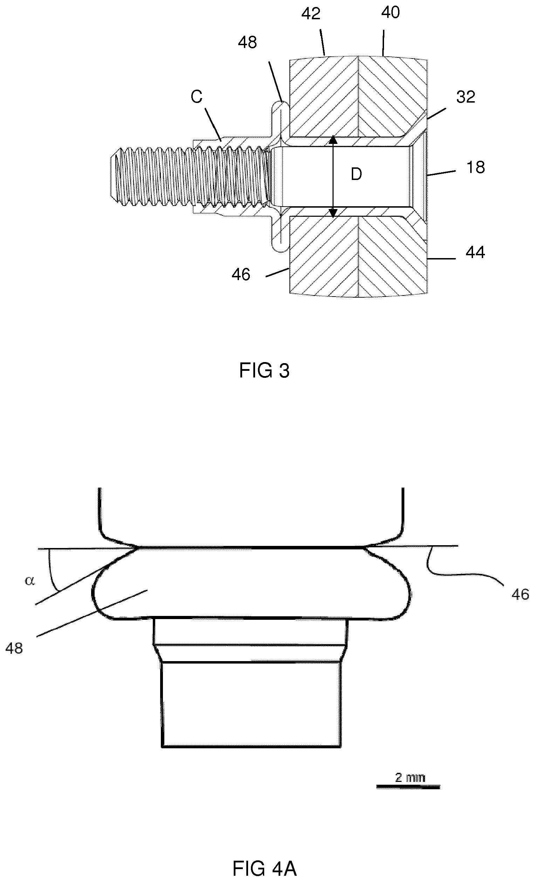

La figure 3 montre la fixation 10 des figures 1 et 2 dans un état installé dans deux structures 40, 42 à assembler. L'élément de préhension 14 a été cassé au niveau de la gorge de rupture 16, de sorte qu'il ne reste que la tête 18 de la vis et la collerette 32 de la douille, formant ensemble la tête de la fixation, noyée dans une fraisure préalablement réalisée dans une face accessible 44 de la structure 40. La première zone A de la douille 30 est entièrement noyée dans les structures 40, 42. La deuxième zone B de la douille est déformée et comprend un bulbe 48 dont une face est au contact du côté aveugle 46 de la structure 42, opposé au côté accessible 44. La tension installée entre la tête de la fixation 20, 32 et le bulbe 48 permet de maintenir les structures 40, 42 assemblées. La troisième zone C de douille recouvre en position installé une portion de filetage de la vis adjacente au fût 22. Avantageusement, la fixation comprend un moyen de freinage mécanique ou chimique pour assurer l'indesserabilité des filets en prise, par exemple en déformant les filets taraudés de la douille, ou en ajoutant un produit de freinage sur les filets de la vis.

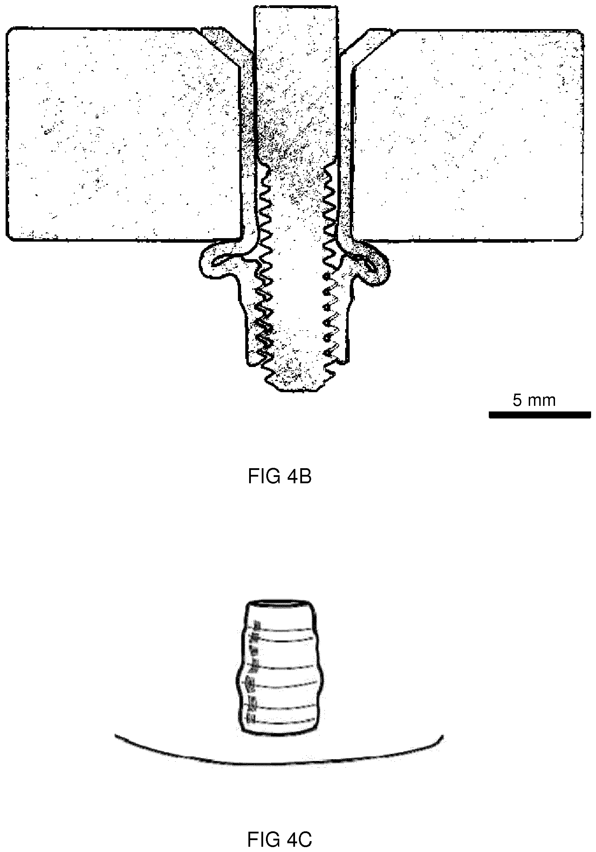

La fixation 10 selon l'invention a un diamètre extérieur apte à être inséré avec jeu dans le perçage d'une structure ayant un diamètre nominal D. Une fois la fixation 10 déformée, le bulbe 48 a un diamètre extérieur au moins égal à une fois et demi le diamètre nominal D du perçage sur l'ensemble de la plage de serrage. Un bulbe correctement formé est illustré en figure 3. Lorsque le bulbe est incorrectement formé, le risque de matage et/ou le risque de délaminage augmente. Le bulbe peut ainsi prendre une forme de « parapluie » (figures 4A, 4B) dans laquelle le bulbe forme un angle $\alpha$ avec la face aveugle 46. La surface d'appui se trouve significativement réduite, ce qui induit un risque de matage accru. Une autre forme incorrecte est la formation d'un double bulbe (figure 4C), assurant une surface d'appui de diamètre insuffisant sur la face aveugle 46.

La fixation 10 est par exemple installée au moyen d'un outil de pose qui effectue dans un premier temps une traction sur l'élément de préhension 14 de la vis, tout en maintenant la douille 30 dans la structure en plaquant la collerette 32 contre la structure 40.

La traction entraîne la portion filetée 22 de la vis et le taraudage 36 de la douille vers la face aveugle 46 de la structure. La zone de déformation B du fût tubulaire est déformée pour créer un bulbe 48, dont une face vient en appui contre la face aveugle 46.

Dans une deuxième étape, un mouvement de rotation est imprimé à la vis, de sorte que cette dernière est vissée dans la douille 14 jusqu'à ce que la tête 20 de la vis soit en appui dans la collerette 32 de la douille.

La dernière étape consiste à finaliser l'installation de la fixation 10 en cassant l'élément de préhension 14 de la vis. Pour cela, l'outil de pose continue de tourner dans le même sens de rotation, imposant dans la structure et la vis une tension de plus en plus grande. La gorge de rupture 16 est conçue pour casser au-delà d'un certain couple engendrant une tension minimum dans la structure. La gorge 16 casse donc une fois le seuil de couple atteint, laissant la tête 20 de la vis affleurante à la surface accessible de la structure 40.

La vis est par exemple en alliage de titane Ti6Al4V, revêtue d'une couche de lubrifiant et la douille est par exemple en acier inoxydable du type A286 passivé. La zone de déformation B est obtenue par un recuit local. La résistance de cette zone est d'environ 550 MPa, alors que la résistance des première et troisième zones A et C est d'environ 1200 MPa. D'autres matériaux pour la vis et la douilles peuvent être choisis.

Pour former un bulbe de forme correct et atteignant un diamètre égal à une fois et demie le diamètre du perçage, le demandeur a établi que la longueur L de la zone déformable B devait s'inscrire entre une valeur minimale et une valeur maximale définies par deux relations.

Le demandeur a ainsi établi que, pour former un bulbe égal à une fois et demie le diamètre du perçage pour une épaisseur nominale donnée de structure, dans les configurations d'épaisseur minimales à maximales, la longueur L de la zone déformable B doit être supérieure à une longueur minimale Lmin selon la relation {1} ci-dessous :

$$\text{Lmin} = \text{D}/2 + 2\text{E} + (\text{Gmax} - \text{Gmin}), \qquad \{1\}$$

Le demandeur a également établi que la forme du bulbe est correcte et reproductible si la longueur L de la zone déformable B est inférieure à une longueur maximale Lmax selon la relation {2} ci-dessous :

$$Lmax = (E / 0,092) \quad \{2\}$$

Dans les relatons {1} et {2}, D est le diamètre nominal du perçage dans lequel la fixation 10 est destinée à être insérée, E est l'épaisseur nominale de la paroi de la zone déformable B du fût tubulaire 34 de la douille 30 avant déformation.

La valeur de 0,092 a été établie par essais. En dessous de cette valeur, un risque d'instabilité de la zone déformable est avéré pouvant engendrer la formation de bulbes « parapluie » ou de doubles bulbes des figures 4A, 4B et 4C.

Par exemple, une douille présentant une épaisseur de 0,625 mm et une longueur L de la zone déformable B égale à 7,286 mm pour un diamètre nominal de 6,35 mm se déforme en forme de parapluie comme cela est visible sur la figure 4B. En effet, selon les relations {1} et {2}, la longueur L de la zone déformable doit être comprise entre Lmin=6,408 mm et Lmax=6,789 mm. Une longueur de 7,286 mm supérieure à la longueur maximale définie par la relation {2} ne permet donc pas de former un bulbe correct, dont toute la surface appuie sur la face arrière de la structure.

Dans un autre exemple, une fixation aveugle commercialisée, décrite dans le brevet US6868757 et comprenant les caractéristiques du préambule de la revendication 1, présentant une épaisseur de 0,51 mm pour un diamètre nominal de 6,35 mm et une longueur L de la zone déformable B égale à 4,11 mm se déforme en un bulbe de forme correcte mais de diamètre égal à seulement 1,30 fois le diamètre nominal du perçage. En effet, la longueur de recuit L est inférieure à la longueur minimale requise par l'invention qui est, suivant la relation {1}, égale à 6,045 mm.

La zone déformable B doit commencer au plus au plan de serrage minimum Gmin de la fixation afin d'assurer que le bulbe se forme sur une structure présentant une épaisseur minimale. Dans le cas contraire, le bulbe se formera à distance de la face aveugle de la structure et n'assurera pas sa fonction de serrage des éléments de structure.

Au-delà du plan de serrage maximum Gmax de la fixation, la paroi de la douille doit être suffisamment déformable sur au moins la distance (D/2 + 2E) afin de former un bulbe large d'au moins une fois et demi le diamètre de perçage.

Lorsque la longueur L de la zone déformable B ne respecte pas la relation {2}, le bulbe ne se forme plus correctement. Il prend par exemple la forme d'un parapluie, ou forme un double bulbe.

Par exemple, une fixation de diamètre 6,32 mm destinée à être insérée dans un perçage de diamètre nominal D = 6,35 mm (8/32") et de « grip 8 », c'est-à-dire conçue pour assembler des éléments de structure ayant une épaisseur nominale de 12,70 mm (8/16") a une capacité de serrage minimum Gmin de 10,914 mm et une capacité de serrage maximale Gmax de 12,898 mm. Elle présente donc une plage de serrage de 1,984 mm (1/16" + 1/64") supérieure à la différence de grip de 1/16" afin d'assurer le recouvrement entre deux plages d'épaisseurs consécutives de structure. L'épaisseur nominale E de la douille est choisie égale à 0,75 mm - afin d'assurer notamment un compromis entre la force nécessaire pour déformer la douille et un diamètre de vis suffisant pour tenir les efforts de tension résultant de l'installation de la fixation dans la structure. La longueur L de la zone déformable B doit donc être

Supérieure à :

$$Lmin = (6,35 / 2) + 2 \times 0,75 + 1,984 = 6,67 \text{ mm}$$

Et inférieure à :

$$Lmax = (0,75 / 0,092) = 8,152 \text{ mm}$$

Dans le cas de la fixation 10 dont la zone de déformation B a subi un recuit local, la dureté devra être suffisamment faible depuis le plan de serrage minimum Gmin sur la longueur L, L étant choisie entre 6,67 mm et 8,152 mm.

Il est à noter que deux fixations 10 de même diamètre extérieur, de même épaisseur E de douille mais de longueurs différentes pour assembler des structures d'épaisseurs différentes, peuvent toutes présenter la même longueur L de zone déformable B puisque les dimensions permettant d'établir les limites minimum et maximum de cette longueurs ne dépendent que du diamètre de perçage D et de l'épaisseur E de douille. La différence entre ces deux fixations réside dans le point de départ de la zone déformable B, qui sera au plus dans le plan de serrage minimum Gmin de la fixation, dont le positionnement dépend de la longueur de la fixation.

Par exemple, pour la fixation 10 de diamètre 8 précédemment décrite, la table 1 indique pour plusieurs exemples d'épaisseurs nominales à serrer le positionnement du plan de serrage miminum Gmin, et les longueurs Lmin et Lmax de la zone déformable B :

Table 1

| Epaisseur nominale à serrer (mm) [1/16"] | Plan de serrage Gmin (mm) | Longueurs Lmin - Lmax (mm) |
|---|---|---|
| 6,35 [4] | 4,564 | 6,67 - 8,152 |
| 7,93 [5] | 6,152 | 6,67 - 8,152 |
| 9,52 [6] | 7,739 | 6,67 - 8,152 |
| 12,70 [8] | 10,914 | 6,67 - 8,152 |

Il est donc possible pour plusieurs fixations de diamètre 8 et de longueurs différentes de présenter une longueur L de la zone déformable B identique.

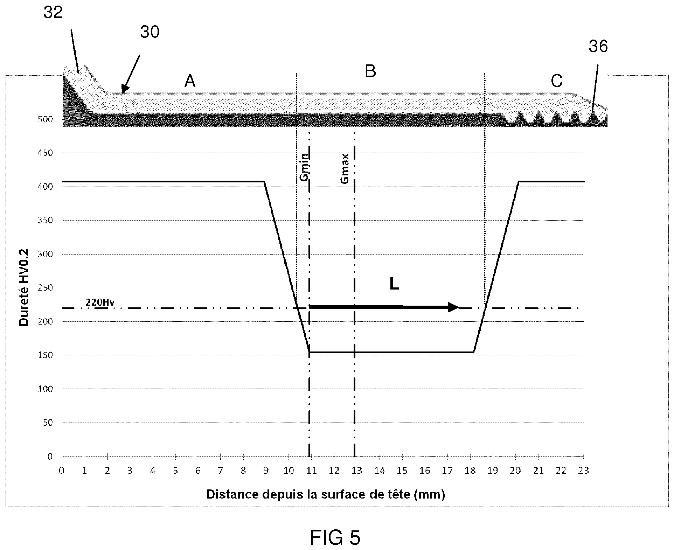

Un exemple de gradient de dureté d'une douille en A286 est représenté en figure 5, avec une longueur L de la zone déformable B choisie à 6,68 mm à partir du plan de serrage minimum Gmin de la fixation 10.

Le graphe de dureté de la figure 5 comprend un plateau « bas » dans la zone déformable B à environ 155 HV, et deux plateaux « hauts » à environ 405 HV dans les zones non déformables A et C. La longueur du plateau bas peut être inférieure à la longueur L ou égale. Il faut que le niveau de dureté soit suffisamment faible sur la longueur L pour que la zone B puisse être effectivement déformée. Le demandeur a établi que la zone déformable B d'une douille en acier inoxydable A286 devait présenter une dureté inférieure de 45% à la dureté de la zone non déformable A. La zone déformable B est obtenue par exemple par un recuit local, abaissant la dureté de l'acier A286 à environ 220 HV. Le recuit local entraîne des zones de transition entre le plateau haut de la zone non déformable A et le plateau bas de la zone déformable B, et entre le plateau bas et le plateau haut de la zone C. Ces pentes peuvent être décalées ou avec avoir une pente différente, du moment que la zone déformable B a une longueur L comprise entre les valeurs minimales et maximales définies par les relations {1} et {2}.

L'avantage du matériau A286 est qu'un recuit local permet de diminuer significativement la dureté du matériau sur la zone recuite. Lors de la déformation de la zone déformable B, le matériau subit un écrouissage et sa dureté augmente de nouveau. Le bulbe formé présente par conséquent une résistance suffisante pour s'opposer aux contraintes de cisaillement qui s'exerce sur la face d'appui du bulbe contre la face aveugle de la structure, lorsque les éléments de structure subissent des contraintes tendant à les écarter les uns des autres.

Les points de départ et pentes des valeurs de dureté de la figure 5 sont également établis en tenant compte des tolérances dues au processus de recuit, qui peuvent être de l'ordre du mm.

D'autres matériaux peuvent être utilisés pour former la douille. Ce peut être par exemple un ou plusieurs titanes, un ou plusieurs alliages de titane ou une combinaison de titane et d'alliages de titane soudés pour former la douille. L'intérêt des titanes et alliages de titane réside essentiellement dans leur faible densité, et une bonne résistance à la corrosion galvanique, ce qui permet de les installer dans des matériaux divers.

Par exemple, le demandeur a réalisé des essais de déformation d'une douille réalisée dans un titane Beta-C, autrement dit de la famille béta métastable. Cet alliage ne présente pas de transformation de phase dans la plage de température immédiatement supérieure à la mise en solution. C'est la raison pour laquelle cet alliage a été choisi. Il était supposé que la possibilité d'utiliser une température élevée, voire très élevée pour le recuit local pouvait adoucir suffisamment le matériau et permettre la déformation de la zone déformable de la douille. Ainsi, le demandeur a trouvé qu'une température de recuit dans une plage de 850°C - 1150°C permettait d'obtenir une zone déformable de dureté moindre que la dureté des zones non recuites. Sur les zones non recuites, la valeur moyenne de dureté est de 470 HV, sur la zone déformable recuite, la valeur de dureté est d'environ de 300 HV, soit 130 à 150 HV de plus que sur une douille en A286. Une douille en alliage de titane Beta-C, présentant une zone déformable dont la dureté est égale ou inférieure à 300 HV et dont la longueur est choisie dans la plage définie par les relations {1} et {2} forme un bulbe large lorsque la fixation est insérée dans une structure présentant une épaisseur minimale correspondant à la capacité de serrage minimale de la fixation.

Dans un autre exemple de réalisation, une fixation de diamètre 4,80 mm destinée à être insérée dans un perçage de diamètre nominal D = 4,83 mm (6/32") pour assembler une structure de « grip 8 », c'est-à-dire une structure ayant une épaisseur nominale de 12,70 mm (8/16"), a une capacité de serrage minimum Gmin de 10,914 mm et une capacité de serrage maximale Gmax de 12,898 mm. Elle présente donc une plage de serrage de 1,984 mm (1/16" + 1/64"). L'épaisseur nominale E de la douille d'une fixation de diamètre 6 est de 0,58 mm. La longueur L de la zone déformable B doit donc être

Supérieure à :

$$Lmin = (4{,}83 / 2) + 2 \times 0{,}58 + 1{,}984 = 5{,}55 \text{ mm}$$

Et inférieure à :

$$Lmax = (0{,}58 / 0{,}092) = 6{,}304 \text{ mm}$$

Dans le cas de la fixation 10, la dureté de la zone de déformation B doit être suffisamment faible sur une longueur L s'étendant depuis le plan de serrage minimum Gmin, L étant choisie entre 5,55 mm et 6,304 mm.

La fixation selon l'invention n'est pas limitée structurellement aux seuls exemples décrits ci-avant. Par exemple, la tête de la fixation peut être protubérante au lieu d'être fraisée. L'élément de préhension peut avoir différentes formes, ou ne pas exister. Dans ce cas, la fixation est installée par exemple en vissant uniquement la vis dans la douille, tout en maintenant la douille immobile. La vis peut ne pas comprendre de fût cylindrique, et comprendre uniquement un fût fileté depuis le dessous de tête.

La douille 14 peut comprendre deux éléments de douille soudés de matériaux différents, et des gorges de compression sur la surface extérieure du premier élément. En variante, la douille 14 peut comprendre un seul élément de douille et une gorge annulaire sur sa surface extérieure.

De même, les matériaux de la vis et de la douille peuvent être différents de ceux décrits, les épaisseurs et les valeurs de dureté des différentes zones de la douille devront être adaptées en fonction des matériaux de la douille et de la vis.

Comme indiqué précédemment, la résistance de la zone déformable B peut être affaiblie en réduisant l'épaisseur de la zone déformable B sur la longueur L, la longueur L devant être comprise entre les valeurs minimales et maximales définies dans les relations {1} et {2}, l'épaisseur E de la paroi étant l'épaisseur de la zone déformable B.

**Revendications**

1. Fixation (10) pour attacher des éléments de structures (40, 42) ayant des perçages alignés présentant un diamètre nominal (D), les éléments ayant une épaisseur nominale variant entre une épaisseur minimale et une épaisseur maximale, la fixation comprenant un plan de serrage minimum (Gmin) et un plan de serrage maximum (Gmax) de ces éléments, et

   - une vis (12) comprenant une tête élargie (18) à une extrémité et une portion filetée (22) à une extrémité opposée,
   - une douille (30) comprenant une tête élargie (32) apte à recevoir la tête (18) de la vis et destinée à venir au contact avec une première face des éléments de structure, un corps tubulaire cylindrique (34) apte à recevoir avec jeu le fût cylindrique (20) de la vis et une portion taraudée (36) venant en prise avec la portion filetée (22) de la vis, la portion taraudée (36) étant adjacente à une portion intérieurement lisse (38) du corps (34) de la douille, ladite portion lisse présentant une épaisseur nominale (E), une zone peu déformable (A) adjacente à la tête (32) de la douille et une zone déformable (B) adjacente à la zone peu déformable (A),
   - la zone déformable (B) de la douille a une résistance affaiblie par rapport à la résistance de la zone peu déformable (A) afin de faciliter la déformation radiale de la portion déformable en un bulbe (48) destiné à venir en contact avec une face (46) des éléments de structure opposée à la première face,

   **caractérisé en ce** la zone déformable (B) s'étend sur une longueur (L) qui est supérieure à une longueur minimale (Lmin) et inférieure à une longueur maximale (Lmax), les longueurs minimale et maximale (Lmin, Lmax) étant définies par les relations :

   $$Lmin = D/2 + 2E + (Gmax - Gmin), \qquad\qquad \{1\}$$

   $$Lmax = (E / 0{,}092) \qquad\qquad \{2\}$$

   le début de la zone déformable (B) étant au plus disposé dans le plan de serrage minimum (Gmin) de la fixation (10).

2. Fixation (10) selon la revendication 1, dans laquelle l'affaiblissement de la résistance de la zone déformable (B) est obtenu par une diminution locale de la dureté.

**3.** Fixation (10) selon la revendication 1 dans laquelle l'affaiblissement de la résistance de la zone déformable (B) est obtenu par une diminution locale de l'épaisseur nominale (E) du corps tubulaire (34).

**4.** Fixation (10) selon la revendication 1 ou 2, dans laquelle la zone déformable (B) présente une dureté inférieure ou égale à 300 HV.

**5.** Fixation (10) selon la revendication 1 ou 2, dans laquelle la zone déformable présente une dureté inférieure ou égale à 220 HV,

**6.** Fixation (10) selon l'une des revendications 1 à 4, dans laquelle la douille est en acier inoxydable de type A286 ou en alliage de titane.

**7.** Fixation (10) selon la revendication 5, ayant un diamètre de 6,32 mm, une épaisseur nominale (E) de corps tubulaire (34) de 0,75 mm et une zone déformable (B) de longueur (L) comprise entre 6,67 mm et 8,152 mm.

**8.** Fixation (10) selon la revendication 5, ayant un diamètre de 4,80 mm, une épaisseur nominal (E) de corps tubulaire (34) de 0,58 mm et une zone déformable (B) de longueur (L) comprise entre 5,55 mm et 6,304 mm.

**Patentansprüche**

**1.** Befestigung (10) zum Anbringen von Strukturelementen (40, 42) mit fluchtenden Bohrungen, die einen nominalen Durchmesser (D) aufweisen, wobei die Elemente eine nominale Stärke haben, die zwischen einer minimalen Stärke und einer maximalen Stärke schwankt, wobei die Befestigung eine Mindest-Spannebene (Gmin) und eine Höchst-Spannebene (Gmax) dieser Elemente umfasst, und

- eine Schraube (12), die einen erweiterten Kopf (18) an einem Ende und einen Gewindeabschnitt (22) an einem gegenüberliegenden Ende umfasst,
- eine Hülse (30), die einen erweiterten Kopf (32) umfasst, der imstande ist, den Kopf (18) der Schraube aufzunehmen und bestimmt ist, mit einer ersten Fläche der Strukturelemente in Kontakt zu kommen, einen rohrförmigen zylindrischen Körper (34), der imstande ist, mit Spiel den zylindrischen Schaft (20) der Schraube aufzunehmen und einen gewindeten Abschnitt (36), der mit dem Gewindeabschnitt (22) der Schraube in Eingriff kommt, wobei der gewindete Abschnitt (36) neben einem innen glatten Abschnitt (38) des Körpers (34) der Hülse ist, wobei der glatte Abschnitt eine nominale Stärke (E), eine wenig verformbare Zone (A) neben dem Kopf (32) der Hülse und eine verformbare Zone (B) neben der wenig verformbaren Zone (A) aufweist,
- wobei die verformbare Zone (B) der Hülse eine geschwächte Widerstandsfähigkeit in Bezug auf die Widerstandsfähigkeit der wenig verformbaren Zone (A) hat, um die radiale Verformung des verformbaren Abschnitts in eine Zwiebel (48) zu erleichtern, die bestimmt ist, mit einer Fläche (46) der Strukturelemente gegenüber der ersten Fläche in Kontakt zu kommen,

**dadurch gekennzeichnet, dass** sich die verformbare Zone (B) über eine Länge (L) erstreckt, die größer als eine minimale Länge (Lmin) und kleiner als eine maximale Länge (Lmax) ist, wobei die minimale und maximale Länge (Lmin, Lmax) bestimmt sind von den Gleichungen:

$$Lmin = D/2 + 2E + (Gmax - Gmin), \qquad \{1\}$$

$$Lmax = (E \ / \ 0{,}092) \qquad \{2\}$$

wobei der Anfang der verformbaren Zone (B) höchstens in der Mindest-Spannebene (Gmin) der Befestigung (10) angeordnet ist.

**2.** Befestigung (10) nach Anspruch 1, wobei die Schwächung der Widerstandsfähigkeit der verformbaren Zone (B) durch eine lokale Verringerung der Härte erhalten ist.

3. Befestigung (10) nach Anspruch 1, wobei die Schwächung der Widerstandsfähigkeit der verformbaren Zone (B) durch eine lokale Verringerung der nominalen Stärke (E) des rohrförmigen Körpers (34) erhalten ist.

4. Befestigung (10) nach Anspruch 1 oder 2, wobei die verformbare Zone (B) eine Härte von unter oder gleich 300 HV aufweist.

5. Befestigung (10) nach Anspruch 1 oder 2, wobei die verformbare Zone eine Härte von unter oder gleich 220 HV aufweist.

6. Befestigung (10) nach einem der Ansprüche 1 bis 4, wobei die Hülse aus rostfreiem Stahl vom Typ A286 oder aus Titanlegierung ist.

7. Befestigung (10) nach Anspruch 5 mit einem Durchmesser von 6,32 mm, einer nominalen Stärke (E) des rohrförmigen Körpers (34) von 0,75 mm und einer verformbaren Zone (B) einer Länge (L), die zwischen 6,67 mm und 8,152 mm liegt.

8. Befestigung (10) nach Anspruch 5 mit einem Durchmesser von 4,80 mm, einer nominalen Stärke (E) des rohrförmigen Körpers (34) von 0,58 mm und einer verformbaren Zone (B) einer Länge (L), die zwischen 5,55 mm und 6,304 mm liegt.

**Claims**

1. Fastener (10) for fastening structural elements (40, 42) having aligned bores having a nominal diameter (D), the elements having a nominal thickness that varies between a minimum thickness and a maximum thickness, the fastener comprising a minimum tightening plane (Gmin) and a maximum tightening plane (Gmax) of these elements, and

   - a screw (12) comprising a widened head (18) at one end and a threaded portion (22) at an opposite end,
   - a sleeve (30) comprising a widened head (32) able to receive the head (18) of the screw and intended to come into contact with a first side of the structural elements, a cylindrical tubular body (34) able to receive with play the cylindrical shaft (20) of the screw and a tapped portion (36) engaging the threaded portion (22) of the screw, the tapped portion (36) being adjacent to an internally smooth portion (38) of the body (34) of the sleeve, said smooth portion having a nominal thickness (E), a slightly deformable area (A) adjacent to the head (32) of the sleeve and a deformable area (B) adjacent to the slightly deformable area (A),
   - the deformable area (B) of the sleeve has a weakened resistance with respect to the resistance of the slightly deformable area (A) in order to facilitate the radial deformation of the deformable portion into a bulb (48) intended to come into contact with a side (46) of the structural elements opposite the first surface,

   **characterised in that** the deformable area (B) extends over a length (L) that is greater than a minimum length (Lmin) and less than a maximum length (Lmax), the minimum and maximum lengths (Lmin, Lmax) being defined by the relationships:

$$Lmin = D/2 + 2E + (Gmax - Gmin), \qquad \{1\}$$

$$Lmax = (E / 0.092) \qquad \{2\}$$

   with the start of the deformable area (B) being at most arranged in the minimum tightening plane (Gmin) of the fastener (10).

2. Fastener (10) according to claim 1, wherein the weakening of the resistance of the deformable area (B) is obtained by a local decrease in the hardness.

3. Fastener (10) according to claim 1 wherein the weakening of the resistance of the deformable area (B) is obtained by a local decrease in the nominal thickness (E) of the tubular body (34).

**4.** Fastener (10) according to claim 1 or 2, wherein the deformable area (B) has a hardness less than or equal to 300 HV.

**5.** Fastener (10) according to claim 1 or 2, wherein the deformable area has a hardness less than or equal to 220 HV.

**6.** Fastener (10) according to one of claims 1 to 4, wherein the sleeve is made from A286 type stainless steel or from a titanium alloy.

**7.** Fastener (10) according to claim 5, having a diameter of 6.32 mm, a nominal thickness (E) of the tubular body (34) of 0.75 mm and a deformable area (B) with a length (L) comprised between 6.67 mm and 8.152 mm.

**8.** Fastener (10) according to claim 5, having a diameter of 4.80 mm, a nominal thickness (E) of the tubular body (34) of 0.58 mm and a deformable area (B) with a length (L) comprised between 5.55 mm and 6.304 mm.

10

12

14

18

30

32

16

FIG. 1

36

34

E

32

22

C

B

Gmax

Gmin

A

20

38

FIG. 2

FIG 3

2 mm

FIG 4A

5 mm

FIG 4B

FIG 4C

FIG 5

**EP 3 308 040 B1**

## RÉFÉRENCES CITÉES DANS LA DESCRIPTION

**Documents brevets cités dans la description**

- US 3236143 A
- US 20140130335 A
- GB 2368889 A
- US 6868757 B